# EUROPEAN PATENT APPLICATION

(11) **EP 1 688 455 A1**
(43) Date of publication of application: **09.08.2006**
(21) Application number: 04818976.5
(22) Date of filing: 19.11.2004
(51) Int. Cl.: C08J 5/18, B29C 61/06, B65D 65/02, B65D 71/08, B65D 73/00, B65D 77/20, C08F 210/16, C08L 23/08, B29K 105/02, B29K 23/00, B29L 7/00

(54) **LOW-TEMPERATURE SHRINKABLE FILM**

(30) Priority: 21.11.2003 JP 2003392281
(71) Applicant: Asahi Kasei Life & Living Corporation, Tokyo, 100-8440 (JP)
(72) Inventor: YOSHINO, Masayuki, Suzuka-shi, Mie 5130804 (JP); TAKEDA, Akinori, Suzuka-shi, Mie 5130804 (JP)
(74) Representative: Strehl Schübel-Hopf & Partner
(86) International application number: PCT/JP2004/017253
(87) International publication number: WO 2005/049702

(57) **Abstract**

An object of the present invention is to provide a shrinkable film excellent in dimensional stability at a temperature of 60°C and having good shrink properties in a temperature of 100°C and 120°C. A low-temperature shrinkable film includes a film composed of at least one layer including at least one ethylene-α-olefin copolymer (A) with a density of from 0.870 g/cm³ to 0.920 g/cm³ and at least one ethylenic copolymer (B) having a main peak below 110°C in the 2nd fusion behavior of differential scanning calorimetry, wherein the proportion of the heat of fusion at 100°C or below to the total heat of fusion is from 50% to 100% in the 2nd fusion behavior of differential scanning calorimetry for ethylene-α-olefin copolymer (A); the proportion of the heat of fusion at 100°C or below to the total heat of fusion is from 60% to 100% in the 2nd fusion behavior of differential scanning calorimetry for the film; and the average value of a heat shrinkage percentage in the longitudinal direction and a heat shrinkage percentage in the lateral direction of the film is from 0 to 15% at 60°C, 50% or greater at 100°C and 70% or greater at 120°C.

## Description

### Background of The Invention

The present invention relates to a low-temperature shrinkable film for shrink packaging, and in particular to an oriented film suitable for shrink packaging and stretch-shrink packaging by an automatic packaging machine of pillow type, push-up type, straight line type or the like.

### Prior Art

Conventionally, shrink packaging has been frequently used in packaging of food, sundry goods and the like, since it has the advantage that single or a plurality of objects to be packaged of any shape or size can be packaged quickly and tightly, and that resulting package has a beautiful appearance, produces a display effect, enhances commercial value, keeps the hygiene of contents and allows visual assessment of quality to be facilitated. Such shrink packaging is a method in which contents are primarily packaged in a film with a size that is a little larger than the contents and then the film is heat-shrunk by hot air or the like, and is typified by, for example, pillow shrink packaging. In this method, an object to be packaged such as food contained in a container or a tray is generally covered with a film, and butt-heat-sealed by means of a center sealing apparatus of a rotating roller-type or the like such that a seal line is positioned at the back surface of the object to be packaged. Subsequently, both open ends of the tubular film are heat-sealed to form a bag, which is then subjected to heat shrinking.

Alternatively, the pillow shrink packaging includes a method of heat-shrinking a bag-like film which is subjected to three sided seal or four sided seal. A typical example of the above described pillow shrink packaging includes packaging of a packed lunch or a prepared food contained in a heat resistant container with a lid, made of polyethylene, polypropylene containing a filler or the like. However, in recent years, salad containers for cut vegetables and the like are packaged. The salad containers adopt containers made of an amorphous polyethylene terephthalate (hereinafter referred to as A-PET) which has a lower heat resistance than a material used for the above described containers. However, the low heat resistance of a container provides a problem of the distortion of a container when a film shrinks. A-PET typically has a glass transition temperature of about 80°C, and if it is heated to this temperature or above, a container is easily distorted.

Therefore, the most important properties of a film for packaging such a container include high shrinkage of a film at a distortion temperature of a container or below, specifically at 120°C or below. As described herein "glass transition temperature" means a temperature where rigidity of a polymeric material sharply changes. At a temperature higher than the glass transition temperature, each part of a polymer is in vigorous thermal motion, showing rubber-like elasticity. At a temperature lower than the glass transition temperature, the thermal motion is suppressed due to the decrease of free volume, increasing the rigidity of a polymer. Moreover, operation of a shrink-tunnel for performing shrink-treatment at a high-temperature condition tends to be disliked by users for hygiene reasons, since the high-temperature condition involves a temperature increase of contents, and there is apprehension that propagation of saprophytic bacteria is accelerated. Furthermore, in terms of energy saving, there is also a desire that operating temperature be as low as possible.

As a multilayer film suitable for shrink packaging, JP-A-07-009640 illustrates a film having a surface layer composed of a mixed resin of an ethylene-α-olefin copolymer and an ethylene-vinyl acetate copolymer and/or the like and an inner layer composed of a polymer layer of a high-pressure low-density polyethylene, and proposes a multilayer film excellent in packaging suitability and surface display properties. However, since a film illustrated in JP-A-07-009640 has an inner layer using a high-pressure polyethylene or a linear low-density polyethylene with a relatively high density, the film has a low shrinkage percentage in a temperature of from 80°C to 120°C, and so it is necessary to set a shrink-tunnel temperature at 140°C or above when the film is served for packaging, resulting in a problem of distortion of a container in the case when an A-PET container is packaged.

In addition, as a film having excellent shrink properties at a low temperature, JP-B-2989479 illustrates a film having a surface layer composed of a compound of an ethylene-α-olefin copolymer and ethylene-vinyl acetate and an inner layer composed of polyvinylidene chloride, or a film in which the ethylene-α-olefin copolymer used in the surface layer is exclusively employed. However, the film illustrated in JP-B-2989479 obtained using a stretching process was stretched at a lower temperature than the melting point of the resin. Therefore, particularly for an example in which a low-melting point resin is used, although the shrink properties at 90°C are excellent, because the stretching temperature is too close to room temperature, the shrinkage constituent at low-temperature is large, whereby dimensional changes can easily occur during storage or transportation. Thus, there is the problem that a specified film may be a different size.
[Patent Document 1] JP-A-07-009640
[Patent Document 2] JP-B-2989479

### Disclosure of The Invention

An object of the present invention is to provide a shrinkable film having good heat-shrinkable properties in a temperature of from 80°C to 120°C.

The present inventors have extensively investigated the above described problems, and as a result have found that the present invention can solve the problems.

Specifically, the present invention is as follows:
1. A low-temperature shrinkable film comprising a composition comprising at least one ethylene-α-olefin copolymer (A) with a density of from 0.870 g/cm³ to 0.920 g/cm³ and at least one ethylenic copolymer (B) having a main peak below 110°C in the 2nd fusion behavior of differential scanning calorimetry, wherein
   (1) the proportion of a heat of fusion at 100°C or below to the total heat of fusion is from 50% to 100% in the 2nd fusion behavior of differential scanning calorimetry for ethylene-α-olefin copolymer (A);
   (2) the proportion of a heat of fusion at 100°C or below to the total heat of fusion is from 60% to 100% in the 2nd fusion behavior of differential scanning calorimetry for the film; and
   (3) the average value of a heat shrinkage percentage in the longitudinal direction and a heat shrinkage percentage in the lateral direction of the film at 60°C is from 0 to 15%, at 100°C 50% or greater and at 120°C 70% or greater.
2. The low-temperature shrinkable film according to 1., wherein ethylenic copolymer (B) is an ethylene-vinyl acetate copolymer with a vinyl acetate content of from 5 to 40% by weight.
3. The low-temperature shrinkable film according to 1., wherein ethylene-α-olefin copolymer (A) has a molecular weight distribution (Mw/Mn) of 3.5 or less.
4. A method for manufacturing a low-temperature shrinkable film comprising the steps of:
   extruding, from a circular die, a resin composition comprising at least one ethylene-α-olefin copolymer (A) with a density of from 0.870 g/cm³ to 0.920 g/cm³ and at least one ethylenic copolymer (B) having a main peak below 110°C in the 2nd fusion behavior of differential scanning calorimetry, wherein
      (1) the proportion of a heat of fusion at 100°C or below to the total heat of fusion is from 50% to 100% in the 2nd fusion behavior of differential scanning calorimetry for ethylene-α-olefin copolymer (A); and
      (2) the proportion of a heat of fusion at 100°C or below to the total heat of fusion is from 60% to 100% in the 2nd fusion behavior of the differential scanning calorimetry for the film,
         introducing a resulting tubular film into a stretching machine, and
         reheating the tubular film in the stretching machine to stretch the same,
         wherein the temperature for starting the stretching is a temperature greater than or equal to a melting point of the resin, and is from 80°C to 150°C.
5. A package obtained by shrink packaging a container made of a thermoplastic resin with a glass transition temperature of 90°C or less with the film according to any one of the above described 1. to 3.

Since a low-temperature shrinkable film of the present invention is made from a specific raw material and is particularly excellent in shrink properties in a temperature of from 100°C to 120°C, this film has a good shrink quality by a pillow or overwrap automatic packaging machine for general tray packaging. Moreover, since it has excellent low-temperature shrink properties, it is also suitable for packaging a container made of a thermoplastic resin having a low heat resistance in which glass transition temperature is 90°C or less such as, for example, amorphous or low-crystallinity PET (e.g. A-PET, PETG) containers used for contents such as fruit, salads, and cut vegetables; or buckwheat noodles (soba), Japanese thin-style noodles (somen), nyuumen-style Japanese noodles, chinese noodles and wheat-type noodles (udon).

### Best Mode for Carrying Out The Invention

The present invention will be specifically described below, particularly concentrating on preferred embodiments thereof.

Ethylene-α-olefin copolymer (A) according to the present invention includes a random copolymer of ethylene and at least one monomer selected from α-olefins with a carbon atom of 3 to 18, wherein α-olefins include propylene, butene-1, pentene-1, 4-methyl-pentene-1, hexene-1, octene-1, decene-1, dodecene-1 and the like.

The ethylene content in the copolymer is preferably from 40% to 95%, more preferably from 50% to 90%, most preferably from 60% to 85%, by weight. The resin may be polymerized with either a multi-site catalyst or a single-site catalyst. However, in terms of compatibility with ethylenic copolymer (B), the resin preferably has a composition polymerized with a single-site catalyst and having a low molecular weight distribution. Use of the resin with a molecular weight distribution (Mw/Mn) as determined by gel permeation chromatography (hereinafter referred to as GPC) of 3.5 or less improves compatibility with ethylenic copolymer (B), resulting in improved transparency.

Ethylene-α-olefin copolymer (A) preferably has a density of from 0.870 g/cm³ to 0.920 g/cm³. A density of 0.870 g/cm³ or more increases stiffness of a film and tends to improve traveling of the film on a packaging machine. A density of 0.920 g/cm³ or less tends to improve compatibility with ethylenic copolymer (B), thereby improving low-temperature shrink properties, transparency after shrink and gloss of a film. Moreover, it is possible to reduce crystallinity of a film as a whole and improve shrink properties in a temperature of from 100°C to 120°C by using ethylene-α-olefin copolymer (A) in which the heat of fusion at 100°C or below to the total heat of fusion is from 50% to 100% in the 2nd fusion behavior (hereinafter referred to as DSC 2nd curve) of differential scanning calorimetry.

Ethylenic copolymer (B) according to the present invention includes an ethylene-vinyl acetate copolymer, an ethylene-acrylic acid copolymer, an ethylene-methacrylic acid copolymer, an ethylene-acrylic ester copolymer and the like. Ethylenic copolymer (B) may be a multi-polymer composed of three components or more further including other components (for example, any multi-polymer composed of three components or more consisting of ethylene and any components selected from aliphatic unsaturated carboxylic acids or esters thereof, or modification thereof). Ethylenic copolymer (B) may be a multi-polymer in which components to be copolymerized are at least two selected from the above described components or other components. Furthermore, ethylenic copolymer (B) may be an ultra low density polyethylene in which ethylene is copolymerized with an α-olefin such as octene-1 as a comonomer. Among others, an ethylene-vinyl acetate copolymer is preferred in terms of transparency. A film can be provided with flexibility and good low-temperature shrink properties by using ethylenic copolymer (B) having a main peak below 110°C in the DSC 2nd curve.

The criteria of the proportion of blending ethylene-α-olefin copolymer (A) and ethylenic copolymer (B) is as follows, though it should not be limited to the following example: For example, when the proportion of the heat of fusion at 100°C or below is about 50%, it is preferable in terms of shrink properties at a low temperature to blend 50% by weight or more of (B) having a melting point of 100°C or below. On the other hand, when 100% of (A) melts at 100°C, (B) can be selected from those having a fusion peak at a temperature of 100°C or more but less than 110°C and the blend proportion of (B) is preferably 50% by weight or less in terms of shrink properties at a low temperature.

Moreover, the average value of a heat shrinkage percentage in the longitudinal direction and a heat shrinkage percentage in the lateral direction of the film at 60°C is preferably from 0 to 15%, and more preferably 0 to 10%. If the heat shrinkage percentage at 60°C exceeds 15%, dimensional stability deteriorates due to the temperature increasing during distribution and storage or transportation. For example, as a result of a temperature increase during distribution and storage, the film may shrink to narrow its width, leading to the film skewing while being run through the packaging machine, and to sealing failure in serious cases. On the other hand, a heat shrinkage percentage of 50% or more is preferable at 100°C, and more preferable is 60% or more. At 120°C, a heat shrinkage percentage of 70% or more is preferable, while 75% or more is more preferable. If the heat shrinkage percentage at 100°C to 120°C is below the above-described heat shrinkage percentages, the shrinkage is insufficient during pillow packaging. This leads to problems such as fine wrinkles remaining, thereby leading to a drop in merchantability. In particular, for plate or bowl shaped containers, corners may be left, whereby a tight packaged object cannot be achieved.

A film of the present invention is stretched into a film by a double-bubble inflation process or a tenter process. In particular, a double-bubble inflation process is suitable for stretching a film into a thin film with a thickness of about 10 µm. Specifically, a resin is extruded from a circular die to form an unstretched tubular film, which is rapidly cooled and introduced into a stretching machine. Preferably, the tubular film is heated to a temperature for starting stretching which is equal to or greater than the resin melting point and is from 80°C to 150°C and then air is injected into the tubular film between nip rolls which have a difference in rotation speed, stretching the film by four to ten times in length both in the longitudinal and lateral directions. As described herein "melting point" means the peak value in a DSC 2nd fusion pattern during fusion, although when there are 2 or more peaks, it refers to the peak value having the highest temperature. Stretching at a temperature equal to or greater than the resin melting point allows good dimensional stability, because a low-temperature shrinkage component of 40°C to 60°C does not easily remain. Further, stretching at 150°C or less makes it difficult for roughness to form on the film surface, whereby transparency and gloss tend to improve.

Moreover, heat resistance may be imparted by, for example, crosslinking treatment depending on the purpose. While crosslinking can be carried out either before or after extrusion, there are cases where it is preferable to carry it out beforehand as a comparatively small size crosslinking apparatus can be used.

From a sealing properties perspective, it may be preferable to make into a multilayered structure. To produce a multilayered film, when preparing using a double-bubble inflation process, for example, a multilayered original sheet can be obtained by employing a plurality of extruders. In the present invention, although the number of layers is not restricted, 3 layers or 5 layers may be preferable from a perspective of thickness deviation adjustment. For example, in case of 3, 5 or 7 layers, the heat of fusion at 100°C or below to the total heat of fusion is preferably 60% to 100% in the 2nd fusion behavior of differential scanning calorimetry of each layer. In some cases, films having the desired shrink properties may be obtained when the heat of fusion at 100°C or below represents less than 60%. However, when a high-melting-point resin is used in such cases, the shrink properties of the layer itself, particularly the transparency after shrinkage may be reduced. When a layer of a composition of ethylene-α-olefin copolymer (A) and ethylenic copolymer (B) is used as the inner layer, in terms of transparency and sealing properties, the resin used in the surface layer may preferably be an ethylene-α-olefin copolymer, a high-pressure low-density polyethylene, an ethylene-vinyl acetate copolymer, an ethylene-acrylic acid copolymer, an ethylene-methacrylic acid copolymer, an ethylene-acrylic ester copolymer and the like. In terms of sealing properties, particularly preferable may be an ethylene-α-olefin copolymer, a high-pressure low-density polyethylene, an ethylene-vinyl acetate copolymer and a mixture of several of the resins thereof. Particularly in terms of sealing properties and shrink properties, it is most preferable to use, as a composition for the surface layer, an ethylene-α-olefin copolymer having a density of 0.880 to 0.920 g/cm³ and one or two or more ethylenic polymers selected from a high-pressure low-density polyethylene having a melting point of 110°C or less, an ethylene-vinyl acetate copolymer, an ethylene-acrylic acid copolymer, an ethylene-methacrylic acid copolymer, an ethylene-acrylic ester copolymer and the like in a blend ratio of 50% by weight or less. When the density of an ethylene-α-olefin copolymer is 0.880 g/cm³ or less, the sealing strength may decrease. When the density exceeds 0.920 g/cm³, the shrink rate may be less than the inner layer. If the outer layer does not follow the shrink of the inner layer, the transparency after shrink tends to decrease. The ethylenic polymer to be blended has preferably a melting point of 110°C or less in terms of shrink properties at a low temperature and 80°C or more in terms of prevention of sticking to the film surface.

When a layer of a composition of ethylene-α-olefin copolymer (A) and ethylenic copolymer (B) is used as the surface layer, it is possible to use, as a composition for the inner layer, an ethylene-α-olefin copolymer having a density in a range of 0.880 to 0.920 g/cm³, or one or two or more ethylenic polymers selected from a high-pressure low-density polyethylene having a melting point of 110°C or less, an ethylene-vinyl acetate copolymer, an ethylene-acrylic acid copolymer, an ethylene-methacrylic acid copolymer, an ethylene-acrylic ester copolymer and the like. When the density of an ethylene-α-olefin copolymer is 0.880 g/cm³ or less, the stiffness of a film may decrease. When the density exceeds 0.920 g/cm³, the shrink properties may worsen. The ethylenic polymer to be used as the inner layer has preferably a melting point of 100°C or less in terms of shrink properties at a low temperature.

Next, the extruded original sheet is stretched at a stretching factor of 4 to 10 times, at a temperature for starting stretching of 80°C to 150°C to obtain an original sheet film. A film that is suitable for printing applications can be obtained by subjecting this original sheet film to a surface treatment, such as corona treatment, ozonation, flame treatment or the like. The sheet film thus obtained is slitted to produce films of a predetermined size. The film thickness is preferably from 7 to 30 µm, and more preferably is from 8 to 20 µm. A film of the present invention may contain a surfactant and an anti-fog additive to the extent that original properties are not impaired. These additives include, for example, fatty acid esters of polyhydric alcohols such as glycerin fatty acid esters and polyglycerin fatty acid esters. When a fatty acid ester of a polyhydric alcohol is used, such as a glycerin fatty acid ester or a polyglycerin fatty acid ester, the content is preferably from 0.5 to 10% by weight, although from the perspective of antistatic properties 0.8% by weight or more is preferable, and from the perspective of extrusion stability 6.0% by weight or less is preferable. When the film is to be used in a printing application, it is preferable to add from 0.8 to 2.0% by weight of a fatty acid ester of a polyhydric alcohol, such as a glycerin fatty acid ester or a polyglycerin fatty acid ester, subject the resulting mixture to corona treatment, and then carry out the printing process. From the perspective of preventing peeling, it is more preferable if the added amount is from 1.0% by weight to 1.5% by weight. A film of the present invention may further contain a mineral oil and a petroleum resin as a plasticizer. A high-pressure low-density polyethylene or the like may be incorporated into a film of the present invention as a processing aid in a range where original properties are not impaired. When a mineral oil or a petroleum resin (Alcon (trademark), Clearon (trademark)) is employed, transparency and shrink properties are preferable if the added amount is from 0.1% by weight to 10% by weight.

The present invention will be described with reference to examples.

### (1) Differential scanning calorimetry (DSC)

An input-compensated differential scanning calorimeter Diamond DSC (trademark) from Perkin-Elmer was used to increase the temperature of a sample from 0°C to 200° at a rate of 10°C/min (1st fusion behavior). After keeping the temperature at 200°C for one minute, the temperature of the sample was decreased to 0°C at a rate of 10°C/min (1st crystallization behavior). Then, the temperature of the sample was again increased to 200°C at a rate of 10°C/min (2nd fusion behavior). A main peak at the 2nd fusion behavior was adopted. The weight of the sample was in a range of from 5 to 10 mg.

### (2) Molecular weight distribution (Mw/Mn)

Molecular weight distribution was determined using GPC (GPC apparatus 150C type (trademark) from Nihon Waters K.K.), a column TSK GMH-6 (trademark) from Tosoh Corporation and orthodichlorobenzene (ODCB) as a solvent, at a condition of a temperature of 135°C, a flow rate of 1 ml/min, a concentration of 10 mg/10 ml and a flow rate of a sample of 500 µl. The Mw/Mn was determined from the weight average molecular weight (Mw) and the number average molecular weight (Mn) calculated from a calibration curve of a standard polystyrene.

### (3) Haze after shrinkage

A wooden frame of 100 mm square was covered with a film in an area allowance rate of 30% in advance. This was introduced into a shrink-tunnel heated to 120°C and allowed the film to shrink, obtaining a flat film. The resulting film was evaluated for the transparency of a film in accordance with ASTM-D-1003.

### (4) Gloss after shrinkage

A wooden frame of 100 mm square was covered with a film in an area allowance rate of 30% in advance. This was introduced into a shrink-tunnel heated to 120°C and allowed the film to shrink, obtaining a flat film. The resulting film was evaluated for the gloss of a film in accordance with ASTM-D-2457.

### (5) Shrinkage percentage

A film of 100 mm square was introduced into a hot-air oven set at a specific temperature and subjected to heat treatment for one minute to determine the amount of shrinkage of the film, which was divided by the original dimension, and the resulting values, expressed in percentage, in the longitudinal and lateral directions were averaged.

### (6) Shrink properties of packages

A film obtained was slit to a 500 mm width and served for packaging 20 packs of "High-cooker HD-180B Ivory (trademark)" from Risu Pack Co., Ltd. each containing 200 g of rice, using "FW-3451A-αV (trademark)" from Fuji Machinery Co., Ltd. The resulting packages were subjected to heat treatment in a shrink-tunnel set at 120°C for 3 minutes and evaluated for shrink properties. Packages that were completely shrunk and had a good finish were given 5 points; packages that did not have any corners remaining, but did have some wrinkles were given 4 points; packages that had a few corners were given 3 points; packages that had some looseness, wherein the packaging was not tight were given 2 points; and packages that did not have any packaging at all were given 1 point.

### (7) Evaluation of dimensional stability

The obtained 300 mm width roll-shaped film was left for 2 weeks at 40°C, and evaluated over 5 levels according to the variation in dimensions in the width direction after two weeks had passed compared to the before-use film which had a width dimension of 300 mm.
5 points: Width direction dimension change = less than 3 mm (level at which there would be no problems in practice)
4 points: Width direction dimension change = 3 mm or more to less than 6 mm
3 points: Width direction dimension change = 6 mm or more to less than 9 mm (level at which there is a possibility of sealing failure)
2 points: Width direction dimension change = 9 mm or more to less than 12 mm
1 point: Width direction dimension change = more than 15 mm (not suitable for practical use)

### (8) Resins used in examples and comparative examples

VL 1: ethylene-α-olefin copolymer (polymerized with a single-site catalyst, α-olefin = hexene-1, density = 0.900 g/cm³, MI = 2.0 g/10 min, Mw/Mn = 2.18, the proportion of the heat of fusion at 100°C or below to the total heat of fusion in a DSC 2nd curve = 99.6%)
VL 2: ethylene-α-olefin copolymer (polymerized with a single-site catalyst, α-olefin = hexene-1, density = 0.904 g/cm³, MI = 2.0 g/10 min, Mw/Mn = 3.08, the proportion of the heat of fusion at 100°C or below to the total heat of fusion in a DSC 2nd curve = 69.0%)
VL 3: ethylene-α-olefin copolymer (polymerized with a single-site catalyst, α-olefin = hexene-1, density = 0.915 g/cm³, MI = 2.0 g/10 min, Mw/Mn = 3.02, the proportion of the heat of fusion at 100°C or below to the total heat of fusion in a DSC 2nd curve = 55.1%)
VL 4: ethylene-α-olefin copolymer (polymerized with a single-site catalyst, α-olefin = butene-1, density = 0.880 g/cm³, MI = 0.5 g/10 min, Mw/Mn = 2, the proportion of the heat of fusion at 100°C or below to the total heat of fusion in a DSC 2nd curve = 100%)
LL 1: ethylene-α-olefin copolymer (polymerized with a single-site catalyst, α-olefin = hexene-1, density = 0.925 g/cm³, MI = 2.0 g/10 min, the proportion of the heat of fusion at 100°C or below to the total heat of fusion in a DSC 2nd curve = 37.9%)
EVA 1: ethylene-vinyl acetate copolymer, vinyl acetate content = 15% by weight, MI = 1.0 g/10 min
EVA 2: ethylene-vinyl acetate copolymer, vinyl acetate content = 5% by weight, MI = 2.0 g/10 min
EVA 1 and EVA 2 each have a main peak below 110°C in the DSC 2nd curve.

### Example 1

To a mixture comprising 60% by weight of VL 2 and 40% by weight of EVA 1, was added 1.5% by weight of a diglycerin fatty acid ester. The resulting mixture was extruded from a circular die and then cooled with chilled water to solidify an extrudate to form a tubular film with a folded width of 120 mm and a thickness of 460 µm. The film was introduced into an electron beam irradiation apparatus to irradiate an electron beam accelerated to 500 kV to conduct a crosslinking treatment such that an absorbed dose of 100 kGy is obtained. The resultant film was introduced into a stretching machine for reheating and passed through between two pairs of differential nip rolls. The temperature for starting stretching was set at 140°C, and air was injected into the tubular film between the nip rolls to stretch the film by seven times in the longitudinal direction and by six times in the lateral direction, obtaining a film with a thickness of 11 µm. A 2-ply film was prepared by simultaneously cutting both ends of the obtained tubular film into sizes having a 300 mm width. Each ply of film was wound to a length of 200 m onto a paper core having a 310 mm width, 76.2 mm diameter and 10 mm thickness at a tension sufficient to stop wrinkles from forming. This was used as the film for evaluation.

### Example 2

A film with a thickness of 11 µm was obtained by a similar operation as in Example 1, except that 40% by weight of VL 3 and 60% by weight of EVA 1 were used instead.

### Example 3

A film with a thickness of 11 µm was obtained by a similar operation as in Example 1, except that 60% by weight of VL 1 and 40% by weight of EVA 1 were used instead.

### Example 4

A film with a thickness of 11 µm was obtained by a similar operation as in Example 1, except that 40% by weight of VL 1 and 60% by weight of EVA 1 were used instead.

### Example 5

A film with a thickness of 11 µm was obtained by a similar operation as in Example 1, except that a three-layer structure consisting of a core layer and surface layers laminated on both sides thereof was used. The core layer is composed of a mixture of 60% by weight of VL 2 and 40% by weight of EVA 1 and contains 1.5% by weight of a diglycerin fatty acid ester. Each of the surface layers is composed of VL 2 containing 1.5% by weight of a diglycerin fatty acid ester.

### Example 6

A film with a thickness of 11 µm was obtained by a similar operation as in Example 1, except that a three-layer structure consisting of a core layer and surface layers laminated on both sides thereof was used. The core layer is composed of a mixture of 60% by weight of VL 2 and 40% by weight of EVA 1 and contains 1.5% by weight of a diglycerin fatty acid ester. Each of the surface layers is composed of EVA 1 containing 1.5% by weight of a diglycerin fatty acid ester.

### Example 7

A film with a thickness of 11 µm was obtained by a similar operation as in Example 1, except that a three-layer structure consisting of a core layer and surface layers laminated on both sides thereof was used. The core layer is composed of a mixture of 40% by weight of VL 2 and 60% by weight of EVA 1 and contains 1.5% by weight of a diglycerin fatty acid ester. Each of the surface layers is composed of VL 3 containing 1.5% by weight of a diglycerin fatty acid ester.

### Example 8

A film with a thickness of 11 µm was obtained by a similar operation as in Example 1, except that a three-layer structure consisting of a core layer and surface layers laminated on both sides thereof was used. The care layer is composed of a mixture of 60% by weight of VL 3 and 40% by weight of EVA 1 and contains 1.5% by weight of a diglycerin fatty acid ester. Each of the surface layers is composed of EVA 1 containing 1.5% by weight of a diglycerin fatty acid ester. The results of evaluations performed on films obtained in Examples 1 to 8 are shown in Tables 1 and 2. It is evident from the results that the proportion of the heat of fusion at 100°C or below to the total heat of fusion in the DSC 2nd curve is 50% or more for all of the films obtained; that at 100°C and 120°C the heat shrinkage percentages are respectively 50% or more and 70% or more, and therefore these films are excellent in shrink properties as well as transparency and gloss after shrinkage. On the other hand, heat shrinkage percentage at 60°C was respectively 5% or less and dimensional stability evaluation at 40°C storage was good.

### Comparative Example 1

A film with a thickness of 11 µm was obtained by a similar operation as in Example 1, except that there was used a composition which is composed of 60% by weight of VL 3 and 40% by weight of EVA 2 and contains 1.5% by weight of a diglycerin fatty acid ester. The results of evaluations performed on a film obtained are shown in Table 3. Since the proportion of the heat of fusion at 100°C or below to the total heat of fusion in the DSC 2nd curve was low, the shrinkage percentage was low particularly in a temperature range of from 80°C to 100°C, resulting in insufficient shrinkage in practical packaging.

### Comparative Example 2

A film with a thickness of 11 µm was obtained by a similar operation as in Example 1, except that there was used a composition which is composed of 40% by weight of VL 3 and 60% by weight of EVA 2 and contains 1.5% by weight of a diglycerin fatty acid ester. The results of evaluations performed on a film obtained are shown in Table 3. Since the proportion of the heat of fusion at 100°C or below to the total heat of fusion in the DSC 2nd curve was low, the shrinkage percentage was low particularly in a temperature range of from 80°C to 100°C, resulting in insufficient shrinkage in practical packaging.

### Comparative Example 3

A mixture comprising 70% by weight of VL 4 and 30% by weight of EVA 1 was extruded from a circular die and then cooled with chilled water to solidify an extrudate to form a tubular film with a folded width of 120 mm and a thickness of 180 µm. The resultant film was introduced into a stretching machine for reheating and passed through between two pairs of differential nip rolls. The temperature for starting stretching was set at 50°C, and air was injected into the tubular film between the nip rolls to stretch the film by four times in the longitudinal direction and by four times in the lateral direction, obtaining a film with a thickness of 11 µm. Since the shrinkage percentage at 60°C was high, the dimensional stability was extremely poor, and thus the film was not suitable for practical use. Since the shrinkage percentage was low at 120°C, though it was high at 100°C, sufficient shrinkage couldn't be obtained in practical packaging.

### Comparative Example 4

A film with a thickness of 11 µm was obtained by a similar operation as in Example 1, except that for a core layer there was used a composition which is composed of 60% by weight of LL 1 and 40% by weight of EVA 1 and contains 1.5% by weight of a diglycerin fatty acid ester, and VL 2 was used for both surface layers. The results of evaluations performed on a film obtained are shown in Table 4. Since LL 1 used for a core layer had a density of 0.920 g/cm³ or more, it had a poor compatibility with EVA 1, resulting in poor transparency. Moreover, since the proportion of the heat of fusion at 100°C or below to the total heat of fusion of the film was less than 60%, the shrinkage percentage was low particularly in a temperature range of from 80°C to 100°C, resulting in insufficient shrinkage in practical packaging.

Manufacturing conditions such as the composition of resins and physical properties of films for Examples and Comparative Examples are shown in Tables 1 to 4.

**Table 1**

| | | Example 1 | Example 2 | Example 3 | Example 4 |
|---|---|---|---|---|---|
| Composition of resins | | VL2:60 EVA1:40 | VL3:40 EVA1:60 | VL1:60 EVA1:40 | VL1:40 EVA1:60 |
| Proportion of the heat of fusion at 100°C or below to the total heat of fusion for films (%) | | 80.8 | 82.7 | 99.95 | 100 |
| Percent of stretch (longitudinal/lateral) | | 7.0/6.0 | 7.0/6.0 | 7.0/6.0 | 7.0/6.0 |
| Optical properties | Haze (%) | 1.1 | 1.1 | 1.0 | 1.1 |
| | Gloss (%) | 143 | 143 | 146 | 145 |
| Shrinkage percentage (longitudinal + lateral)/2 | 60°C | 5 | 4 | 4 | 5 |
| | 80°C | 25 | 24 | 26 | 26 |
| | 100°C | 65 | 66 | 68 | 68 |
| | 120°C | 78 | 75 | 78 | 78 |
| Shrink properties of packages | | 5 points | 5 points | 5 points | 5 points |
| Evaluation dimensional stability | | 5 points | 5 points | 5 points | 5 points |

**Table 2**

| | | Example 5 | Example 6 | Example 7 | Example 8 |
|---|---|---|---|---|---|
| Composition of resins for both surface layers | | VL2 | EVA1 | VL3 | EVA1 |
| Composition of resins for core layer | | VL2:60 EVA1:40 | VL2:60 EVA1:40 | VL2:40 EVA1:60 | VL3:60 EVA1:40 |
| Compositional percentage of layers (%), surface layer/core layer/surface layer | | 20/60/20 | 20/60/20 | 20/60/20 | 20/60/20 |
| Proportion of the heat of fusion at 100°C or below to the total heat of fusion for films (%) | | 76.4 | 88.8 | 72.3 | 84.4 |
| Percent of stretch (longitudinal/lateral) | | 7.0/6.0 | 7.0/6.0 | 7.0/6.0 | 7.0/6.0 |
| Optical properties | Haze (%) | 0.9 | 1.0 | 1.0 | 1.0 |
| | Gloss (%) | 147 | 143 | 145 | 145 |
| Shrinkage percentage (longitudinal + lateral)/2 | 60°C | 5 | 5 | 5 | 5 |
| | 80°C | 25 | 23 | 25 | 24 |
| | 100°C | 65 | 65 | 65 | 65 |
| | 120°C | 78 | 78 | 77 | 78 |
| Shrink properties of packages | | 5 points | 5 points | 5 points | 5 points |
| Evaluation dimensional stability | | 5 points | 5 points | 5 points | 5 points |

**Table 3**

| | | Comparative Example 1 | Comparative Example 2 | Comparative Example 3 |
|---|---|---|---|---|
| Composition of resins | | VL3:60 EVA2:40 | VL3:40 EVA2:60 | VL4:70 EVA1:30 |
| Proportion of the heat of fusion at 100°C or below to the total heat of fusion for films (%) | | 55.3 | 55.6 | 100 |
| Percent of stretch (longitudinal/lateral) | | 7.0/6.0 | 7.0/6.0 | 4.0/4.0 |
| Optical properties | Haze (%) | 1.5 | 1.5 | 1.2 |
| | Gloss (%) | 143 | 145 | 145 |
| Shrinkage percentage (longitudinal + lateral)/2 | 60°C | 0 | 2 | 28 |
| | 80°C | 8 | 8 | 45 |
| | 100°C | 14 | 13 | 51 |
| | 120°C | 78 | 78 | 52 |
| Shrink properties of packages | | 2 points | 2 points | 3 points |
| Evaluation dimensional stability | | 5 points | 5 points | 1 point |

**Table 4**

| | | Comparative Example 4 |
|---|---|---|
| Composition of resins for surface layers | | VL2 |
| Composition of resins for core layer | | LL1:60 EVA1:40 |
| Compositional percentage of layers, surface layer/core layer/surface layer (%) | | 20/60/20 |
| Proportion of the heat of fusion at 100°C or below to the total heat of fusion for films (%) | | 55.2 |
| Percent of stretch (longitudinal/lateral) | | 7.0/6.0 |
| Optical properties Optical properties | Haze (%) | 1.7 |
| | Gloss (%) | 138 |
| Shrinkage percentage (longitudinal + lateral)/2 | 60°C | 1 |
| | 80°C | 5 |
| | 100°C | 10 |
| | 120°C | 78 |
| Shrink properties of packages | | 2 points |
| Evaluation dimensional stability | | 5 points |

### Industrial Applicability

A film of the present invention can be suitably utilized in food packaging applications such as packaging of food in a container with a lid, a tray without a lid and the like.

## Claims

1. A low-temperature shrinkable film comprising a composition comprising at least one ethylene-α-olefin copolymer (A) with a density of from 0.870 g/cm³ to 0.920 g/cm³ and at least one ethylenic copolymer (B) having a main peak below 110°C in 2nd fusion behavior of differential scanning calorimetry, wherein
(1) proportion of a heat of fusion at 100°C or below to total heat of fusion is from 50% to 100% in the 2nd fusion behavior of differential scanning calorimetry for the ethylene-α-olefin copolymer (A);
(2) proportion of a heat of fusion at 100°C or below to total heat of fusion is from 60% to 100% in the 2nd fusion behavior of differential scanning calorimetry for the film; and
(3) average value of a heat shrinkage percentage in longitudinal direction and a heat shrinkage percentage in lateral direction of the film at 60°C is from 0 to 15%, at 100°C 50% or greater and at 120°C 70% or greater.

2. The low-temperature shrinkable film according to claim 1, wherein the ethylenic copolymer (B) is an ethylene-vinyl acetate copolymer with a vinyl acetate content of from 5 to 40% by weight.

3. The low-temperature shrinkable film according to claim 1, wherein the ethylene-α-olefin copolymer (A) has a molecular weight distribution (Mw/Mn) of 3.5 or less.

4. A method for manufacturing a low-temperature shrinkable film comprising the steps of:
extruding, from a circular die, a resin composition comprising at least one ethylene-α-olefin copolymer (A) with a density of from 0.870 g/cm³ to 0.920 g/cm³ and at least one ethylenic copolymer (B) having a main peak below 110°C in 2nd fusion behavior of differential scanning calorimetry, wherein (1) proportion of a heat of fusion at 100°C or below to total heat of fusion is from 50% to 100% in the 2nd fusion behavior of differential scanning calorimetry for the ethylene-α-olefin copolymer (A); and (2) proportion of a heat of fusion at 100°C or below to total heat of fusion is from 60% to 100% in the 2nd fusion behavior of the differential scanning calorimetry for the film,
introducing a resulting raw tubular film into a stretching machine, and
reheating the tubular film in stretching machine to stretch the same,
wherein temperature for starting the stretching is a temperature greater than or equal to a melting point of the resin, and is from 80°C to 150°C.
5. A package obtained by shrink packaging a container made of a thermoplastic resin with a glass transition temperature of 90°C or less with the film according to any one of claims 1 to 3.
